# EUROPEAN PATENT APPLICATION

(11) **EP 3 647 646 A1**
(43) Date of publication of application: **06.05.2020**
(21) Application number: 19188294.3
(22) Date of filing: 25.07.2019
(51) Int. Cl.: F16L 15/00, F16L 19/02

(54) **SCREW FITTING COMPRISING A RING NUT AND A METAL GASKET, AS WELL AS METHOD FOR ASSEMBLING SUCH A FITTING**

(30) Priority: 31.10.2018 IT 201800009956
(71) Applicant: Tapel di Mastromatteo Ciro & C. S.a.s, 36043 Camisano Vicentino (IT)
(72) Inventor: Mastromatteo, Ciro, 36043 Camisano Vicentino (IT)
(74) Representative: Autuori, Angelo

(57) **Abstract**

A fitting for the coupling of a pipe **(P)** to a SAE type threaded end member **(T)** having a substantially frustoconical-shaped end portion **(FC).** The fitting comprises a ring nut **(1)** defining an axis **(X)** and comprising a first substantially frustoconical portion **(10)** and a second threaded portion **(11)** for the mutual screwing with the SAE type threaded end member **(T).** The ring nut **(1)** may otherwise comprise a bushing **(BC)** comprising the substantially frustoconical-shaped portion **(10).** The ring nut **(1)** further comprises a housing zone (**11'**). The fitting further comprises a substantially frustoconical metal gasket **(20)** designed to remain - in use - interposed between the first substantially frustoconical portion **(10)** and the substantially frustoconical-shaped end portion **(FC)** of the SAE type threaded end member **(T);** The substantially frustoconical metal gasket **(20)** comprises at least one centring appendage **(23)** interfering with the housing zone (**11'**) to integrally join the substantially frustoconical metal gasket **(20)** and the ring nut **(1),** so as to form a unitary assembly **(25).** Furthermore, the centring appendage **(23)** acts on the housing zone (**11'**) to prevent the misalignment of the substantially frustoconical metal gasket **(20)** with respect to the axis **(X)** upon the mutual screwing of the first threaded portion **(11)** and of the SAE type threaded end member **(T).**

## Description

### Field of the invention

The present invention generally regards the technical field of fittings for pipes, for example pipes for gas, compressed air, steam, refrigerated water, and it particularly regards a fitting for gas pipes comprising a ring nut and a metal gasket, as well as a method for assembling such fitting.

### Definitions

In the present document, the expression "plastic deformation" or derivatives with reference to a body, is used to indicate the fact that such body is permanently deformed over time following a stress.

### State of the Art

Known are various types of gaskets that can be used in the fittings for pipes designed for the transportation of gas, for example the copper pipes present in a refrigeration and/or air conditioning installation.

Obviously besides a sufficient mechanical sealing on the pipe, such fittings for gas pipes must guarantee a high pneumatic sealing with respect to the gas. The latter is necessary in light of the fact that in such pipes the gas generally circulates at a considerably high pressure.

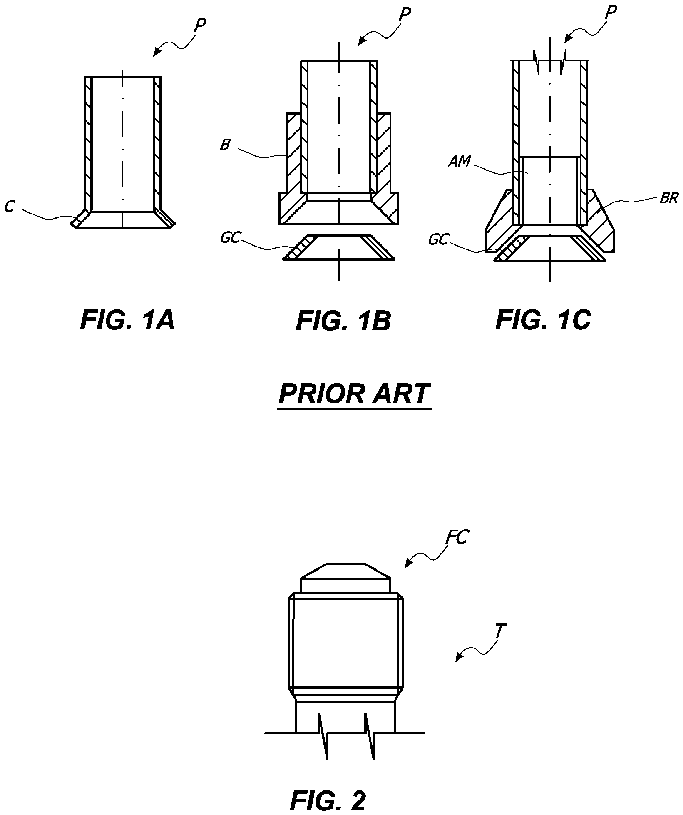

To this end, often used are elastomeric gaskets or, for example as illustrated in FIG. 1C, conical copper gaskets **GC**.

In the latter case, inserted outside the pipe is a rigid bushing **BR**, while the internal of the pipe is inserted into a metal core **AM**. The latter and the rigid bushing **BR** are then radially compressed to guarantee the mechanical sealing on the pipe.

Furthermore, for example as illustrated in FIG. 1A, obtained on the edge of the pipe is the so-called "folder" **C**, i.e. conical gaskets obtained by deforming the pipe.

Another possible solution for guaranteeing the mechanical sealing of the pipe and the soldering of a bushing **B** thereof, as illustrated in FIG. 1B and as disclosed in the United States patent application n° US2014/0339818. A gasket **GC** is then arranged on the bushing **B**.

All such known solutions reveal some disadvantages.

For example, the elastomeric gaskets are only compatible with some types of gas and, over time, they reveal a particularly high wear.

On the other hand, the obtainment of the folders and/or the soldering requires the use of appropriate tools and a particular technical expertise.

Furthermore, the use of the conical copper gaskets **GC** at times reveals not to be optimal, in that the correct positioning of the gasket is at times difficult, with ensuing waste of time as well as poor pneumatic sealing.

A disadvantage common to all solutions of the prior art lies in that the pneumatic sealing reduces over time, with ensuing more or less leakage of gas from the pipe and the need to replace the gasket or the entire pipe.

### Summary of the invention

An object of the present invention is to at least partly overcome the drawbacks outlined above, by providing a ring nut comprising a copper gasket that can be used in a metal fitting for tightening gas pipes that is highly functional and cost-effective.

A particular object of the invention is to provide a ring nut comprising a copper gasket that is particularly easy to use by any operator of the industry, even though not particularly skilled.

Another object of the invention is to provide a ring nut comprising a copper gasket that can be used with a tightening metal fitting for gas pipes capable of guaranteeing an optimal mechanical and pneumatic sealing of the gas pipe.

A further object of the invention is to guarantee the pneumatic and mechanical sealing of the pipe over time.

Such objects, as well as others that will be more clearly apparent hereinafter, are attained by a ring nut comprising a copper gasket having one or more of the characteristics described and/or claimed and/or illustrated hereinafter.

Advantageous embodiments of the invention are defined according to the dependent claims.

### Brief description of the drawings

Further characteristics and advantages of the invention will be more apparent in light of the detailed description of some preferred but non-exclusive embodiments of the invention, illustrated by way of non-limiting example with reference to the attached drawings, wherein:
**FIGS. 1A, 1B, 1C** illustrate some solutions of the prior art;
**FIG. 2** illustrates an example of a SAE type threaded end member **T**;
**FIG. 3** illustrates an axial sectional view of a ring nut **1** comprising a bushing **BC** comprising the frustoconical portion **10** and a copper gasket **20**;
**FIG. 4** illustrates an exploded view of the ring nut **1** and of the bushing **BC** of **FIG. 3**;
**FIGS. 4A** and **4B** illustrate an embodiment of the copper gasket **20** comprising a plurality of appendages **23** respectively in the first and second operative position;
**FIGS. 5A** and **5B** illustrate an axial sectional view of an embodiment of the copper gasket **20** comprising a single appendage **23** respectively in the first and second operative position;
**FIG. 6** illustrates an axial section of the ring nut **1** including the frustoconical portion **10** and the copper gasket **20**;
**FIG. 7** illustrates an axial section of an adapter **40** including the inner profiles of the ring nut 1 of the type illustrated in **FIG. 6**.

### Detailed description of some preferred embodiments

With reference to the aforementioned figures, herein described is a fitting for the coupling of a pipe **P** to a SAE type threaded end member **T** having a substantially frustoconical-shaped end portion **FC**.

The fitting may comprise a ring nut **1** defining an axis **X**.

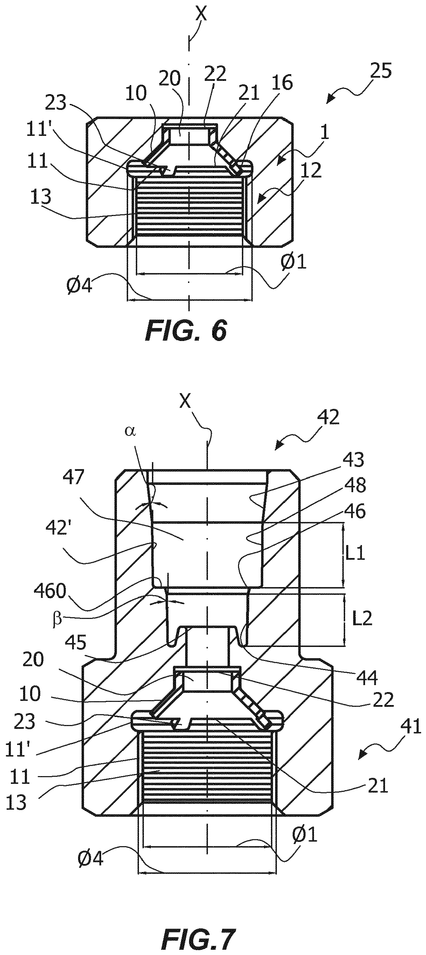

In a first embodiment and with particular reference to **FIG. 6**, such ring nut **1** may comprise an inner surface **12** comprising a first frustoconical portion **10** and a threaded portion **11** comprising a plurality of annular reliefs **13**.

Preferably, the threaded portion **11**, which may have a predefined diameter **Ø1**, may be mutually screwed to the threaded end **T**.

Preferably, the ring nut **1** may comprise a housing zone **11'** interposed between the portions **10** and **11**, which - in a preferred but non-exclusive embodiment - may be an annular groove having diameter **Ø4**.

Suitably, the fitting may further comprise a metal gasket **20**, preferably made of copper, of the per se known type.

It may be a substantially frustoconical body **24** with a larger base **21** and a smaller base **22**.

Preferably, the gasket **20** may be designed to remain - in use - interposed between the frustoconical portion **10** and the end portion **FC** of the SAE type end member **T**.

Suitably, the larger base **21** will have a diameter **Ø2** substantially larger than the diameter **Ø3** of the base **22** and substantially smaller than the diameter **Ø1** of the threaded portion **11**.

Advantageously, along the edge of the base **21** there may be present two pairs of deformable centring appendages **23**, spaced apart from each other by 90° and arranged two by two diametrically opposite.

However, it is clear that such centring appendages may be present in the housing zone **11'** without departing from the scope of protection of the attached claims.

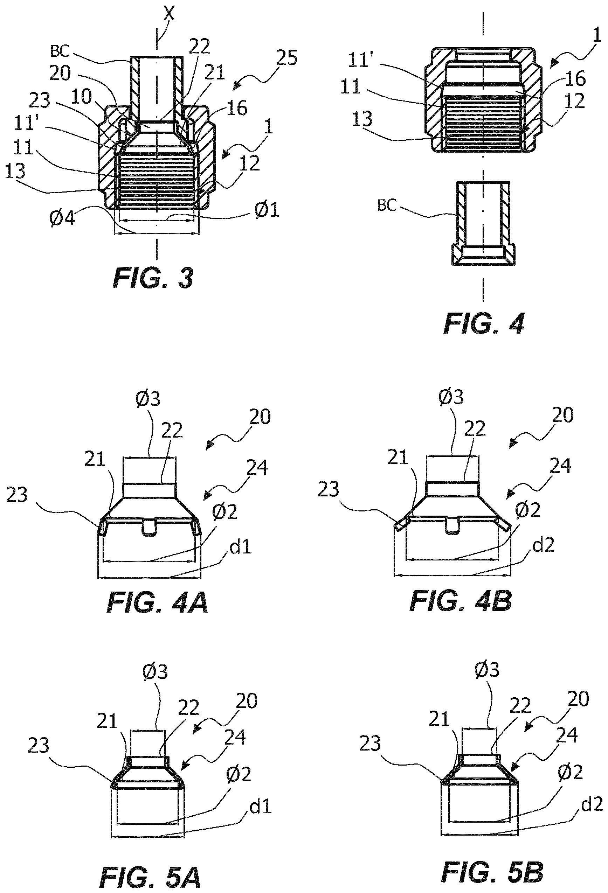

Furthermore, it is clear that the gasket **20**, with particular reference to **FIGS. 4A**, **4B**, **5A**, **5B**, and/or the housing zone **11'** may include one or more deformable centring appendages **23** without departing from the scope of protection of the attached claims.

Suitably, the centring appendages **23** of the gasket **20** may interact with the housing groove **11'** to form a unitary assembly **25** between the gasket **20** and the ring nut **1.**

Preferably, the centring appendages **23** may also prevent the misalignment of the gasket **20** with respect to the axis **X** upon the mutual screwing of the threaded portion **11** and the threaded end member **T**.

To this end, in a preferred but non-exclusive embodiment, the centring appendages **23** may come into contact with a contact surface **16** of the housing groove **11'**, for example as illustrated in FIG. 3.

In this manner, the ring nut **1** and the metal gasket **20** will be mutually coaxial during the entire step of screwing the threaded portion **11** of the ring nut **1** and of the SAE type threaded end member **T**.

Advantageously, to simplify the assembly of the fitting **1**, the centring appendages **23** may be made of a plastically deformable metal material, for example copper or similar material. Suitably, the metallic material of the gasket **20** and of the centring appendages **23** may be the same.

In this manner, an operator may act on the centring appendages **23** to displace them from a first operative position, for example illustrated in **FIG. 4A** and **5A**, in which the free insertion of the metal gasket **20** into the ring nut **1** is allowed, to a second operative position, for example illustrated in **FIG. 4B** and **5B**, in which they abut against the housing zone **11'** to fix the metal gasket **20** and the ring nut **1** to each other.

To this end, in a preferred but non-exclusive embodiment, in the first operative position, the appendages **23** - diametrically opposite to each other - may have a distance **d1** substantially smaller than the diameter **Ø1**. In this manner, it will be possible to easily insert the gasket **20** into the ring nut **1**.

Upon inserting the gasket **20** into the ring nut **1**, the operator may act on the centring appendages **23** to bring them to the second operative position. Basically, the operator will act to diverge the appendages **23**, so that the distance between the diametrically opposite ones passes from the distance **d1** to the distance **d2**, greater than the former and substantially equal to the diameter **Ø4**.

In such position, the appendages **23** may come into contact with the contact surface **16** to maintain the centring of the gasket **20**.

In this manner, the gasket **20** will be irreversibly firmly anchored to the ring nut **1** also avoiding erroneous positionings of the gasket with ensuing gas leakage.

Thus, by exploiting the malleability of copper, this will allow to fix the gasket **20** in the ring nut **1**, with considerable advantage in terms of time and effectiveness in the correct positioning of the gasket.

From an implementation point of view, the operator will insert the copper gasket **20** with the centring appendages **23** in the first operative position in the ring nut **1** so that the respective frustoconical surfaces **24** and **10** adhere mutually.

Thus, the operator may proceed to fix the gasket **20**, so that the appendages **23** deform plastically so as to be inserted into the groove **11'** of the ring nut **1** abutting against the contact surface **16**.

In this manner, the appendages **23** will provide the anchoring of the gasket **20** in the groove **11'** of the ring nut **1**.

According to a preferred but non-exclusive embodiment, the ring nut **1** may be part of an adapter **40** comprising a portion **41** defined by the inner profiles of the ring nut **1** and a portion **42** comprising or consisting of a threaded coupling end member **42**.

Suitably, the threaded coupling end member **42** may define the same axis **X** having a shaped inner portion **42'** sequentially comprising a frustoconical surface **43**, a sliding surface **48**, a second frustoconical surface **44** and at least one abutment surface **45**.

Preferably, the frustoconical surfaces **43**, **44** may be coaxial and convergent towards the axis **X**.

Advantageously, the frustoconical surface **43** may have an angle **α** comprised between 4° and 8°, preferably 6°, while the frustoconical surface **44** may have an angle **β** comprised between 0.5° and 2.5°, preferably 1.5°.

Furthermore, the shaped inner portion **42** may have an introduction surface **46** substantially convergent towards the axis **X**.

Preferably, the introduction surface **46** may be adjacent to the frustoconical surface **44**.

Suitably, the sliding surface **48** may be substantially frustoconical, convergent with respect to the axis **X** and coaxial with respect to the frustoconical surfaces **43**, **44**.

Advantageously, the sliding surface **48** may have a length **L1** sufficiently larger than that **L2** of the frustoconical surface **44**, so as to create a chamber **47**.

Furthermore, the shaped inner portion **42'** may have an abutment surface **460** interposed between the sliding surface **48** and the frustoconical surface **44** to act as a bottom wall of the expansion chamber **47**.

Such adapter **40** may be used for connecting SAE type threaded end members with smooth pipes, in particular gas pipes, without having to carry out the so-called "'folder", for example using a ring nut and a tightening element of the type described in the Italian patent application n° 102018000002959, couplable to the portion **42** of the adapter **40**.

In a second embodiment and with particular reference to **FIGS. 3** and **4**, the pipe **P** may be connected to the SAE type threaded end member **T** by means of a connecting bushing **BC**, per se known. In addition, the latter may be of the type illustrated in **FIG. 1B** and **1C**.

Advantageously, the bushing **BC** may be coaxially inserted into the ring nut **1** and it may comprise the substantially frustoconical-shaped portion **10.**

Thus, the ring nut **1** may comprise the bushing **BC** upon coupling with the SAE type threaded end member **T.**

Suitably, the gasket **20** may be designed to remain - in use - interposed between the frustoconical portion **10** of the bushing **BC** and the end portion **FC** of the SAE type end member **T**.

Advantageously, the appendages **23** may deform plastically, as described above, so as to be inserted into the groove **11'** of the ring nut **1** abutting against the contact surface **16** and providing the anchoring for the gasket **20** in the ring nut **1**.

In light of the above, it is clear that the invention attains the pre-set objectives.

The invention is susceptible to numerous modifications and variants all falling within the inventive concept outlined in the attached claims. Furthermore, all details can be replaced by other technically equivalent elements, and the materials can be different depending on the needs, without departing from the scope of protection defined by the attached claims.

## Claims

1. A fitting for the coupling of a pipe (**P**) to a SAE type threaded end member (**T**) having a substantially frustoconical-shaped end portion (**FC**), the pipe (**P**) being connected to the SAE type threaded end member (**T**) directly or by means of a connecting bushing (**BC**), the fitting comprising:
- a ring nut (**1**) defining an axis (**X**) comprising an inner surface (**12**) wherein:
- should the pipe (**P**) be directly connected to the SAE type threaded end member (**T**), said ring nut (**1**) further includes a first substantially frustoconical-shaped portion (**10**); or
- should the pipe (**P**) be connected to the SAE type threaded end member (**T**) by means of a connecting bushing (**BC**), the latter is coaxially inserted into said ring nut (**1**) and comprises a first substantially frustoconical-shaped portion (**10**);
said ring nut further including:
- a second threaded portion (**11**) for the mutual screwing with the SAE type threaded end member (**T**), said second threaded portion (**11**) having a predetermined first diameter (**Ø1**);
- a housing zone (**11'**) interposed between said first substantially frustoconical portion (**10**) and said second threaded portion (**11**);
the fitting further comprising a substantially frustoconical metal gasket (**20**) designed to remain - in use - interposed between and at contact with said first substantially frustoconical portion (**10**) and the substantially frustoconical-shaped end portion (**FC**) of the SAE type threaded end member (**T**);
wherein one of said substantially frustoconical metal gasket (**20**) and said housing zone (**11'**) comprises at least one centring appendage (**23**) interfering with the other of said substantially frustoconical metal gasket (**20**) and said housing zone (**11'**) to integrally join said substantially frustoconical metal gasket (**20**) and said ring nut (**1**), so as to form a unitary assembly (**25**);
wherein said at least one centring appendage (**23**) acts on the other of said substantially frustoconical metal gasket (**20**) and said housing zone (**11'**) to prevent the misalignment of said substantially frustoconical metal gasket (**20**) with respect to said axis (**X**) upon the mutual screwing of said first threaded portion (**11**) and of the SAE type threaded end member (**T**).

2. Fitting according to claim 1, wherein said at least one centring appendage (**23**) is made of plastically deformable metal material so that an operator can promote the displacement thereof from a first operative position wherein it allows the free insertion of the substantially frustoconical metal gasket (**20**) in said ring nut (**1**) to a second operative position wherein it interferes with the other of said substantially frustoconical metal gasket (**20**) and said housing zone (**11'**) for mutually securing the substantially frustoconical metal gasket (**20**) and ring nut (**1**).

3. Fitting according to claim 1 or 2, wherein said substantially frustoconical metal gasket (**20**) includes a first end peripheral edge (**21**) having a second predetermined diameter (**Ø2**) and a second end peripheral edge (**22**) opposite to said first peripheral end edge (**21**) which has a third predetermined diameter (**Ø3**) considerably smaller than said second predetermined diameter (**Ø2**), the latter being smaller than said first predetermined diameter (**Ø1**) to allow the insertion of the substantially frustoconical metal gasket (**20**) in said ring nut (**1**) when said at least one centring appendage (**23**) is in said first operative position.

4. Fitting according to any one of the preceding claims, wherein said other of said substantially frustoconical metal gasket (**20**) and said housing zone (**11'**) comprises a contact surface (**16**) susceptible to come into mutual contact with at least one centring appendage (**23**) so that said ring nut (**1**) and said metal gasket (**20**) are mutually coaxial during the mutual screwing of said first threaded portion (**11**) and of the SAE type threaded end member (**T**).

5. Fitting according to the preceding claim when dependent on claim 2, wherein the mutual contact between said contact surface (**16**) and said at least one centring appendage (**23**) occurs when the latter is in said second operative position.

6. Fitting according to any one of the preceding claims, wherein said at least one centring appendage (**23**) extends from said first end peripheral edge (**21**) of said substantially frustoconical metal gasket (**20**) to allow the insertion of the substantially frustoconical metal gasket (**20**) in said ring nut (**1**) when said at least one centring appendage (**23**) is in said first operative position.

7. Fitting according to any one of the preceding claims, wherein said housing zone (**11'**) is an annular groove having a fourth diameter (**Ø4**) substantially greater than said first predetermined diameter (**Ø1**).

8. Fitting according to any one of the preceding claims, wherein said one of said substantially frustoconical metal gasket (**20**) and said housing zone (**11'**) includes at least one pair of centring appendages (**23**) facing each other along said second predetermined diameter (**Ø2**), said pair of centring appendages (**23**) having - in said first operative position - a first mutual distance (**d1**) smaller than said first predetermined diameter (**Ø1**) and - in said second operative position - a second mutual distance (**d2**) greater than said first predetermined diameter (**Ø1**).

9. Fitting according to claims 7 and 8, wherein said second mutual distance (**d2**) is substantially equal to said fourth diameter (**Ø4**).

10. A method for assembling a fitting according to one or more of the preceding claims, comprising the steps of:
- providing a ring nut (**1**) defining an axis (**X**) comprising an inner surface (**12**) which includes:
- a first substantially frustoconical portion (**10**);
- a second threaded portion (**11**) for the mutual screwing with the SAE type threaded end member (**T**), said second threaded portion (**11**) having a predetermined first diameter (**Ø1**);
- a housing zone (**11'**) interposed between said first substantially frustoconical portion (**10**) and said second threaded portion (**11**);
- providing a substantially frustoconical metal gasket (**20**) designed to remain - in use - interposed between and at contact with said first substantially frustoconical portion (**10**) and substantially frustoconical-shaped end portion (**FC**) of the SAE type threaded end member (**T**);
wherein one of said substantially frustoconical metal gasket (**20**) and said housing zone (**11'**) comprises at least one centring appendage (**23**) of a plastically deformable metal material;
- plastic deformation of said at least one centring appendage (**23**) so as to promote the interference thereof with the other of said substantially frustoconical metal gasket (**20**) and said housing zone (**11'**) to integrally join said substantially frustoconical metal gasket ( **20**) and said ring nut (**1**), so as to form a unitary assembly (**25**);
wherein the plastic deformation of said at least one centring appendage (**23**) occurs in such a way that the latter acts on the other of said substantially frustoconical metal gasket (**20**) and said housing zone (**11'**) to prevent the misalignment of the substantially frustoconical metal gasket (**20**) with respect to said axis (**X**) upon the mutual screwing of said first threaded portion (**11**) and of the SAE type threaded end member (**T**).
